(19) Europäisches Patentamt
European Patent Office
Office européen des brevets

(11) **EP 1 838 020 A1**

(12) **EUROPEAN PATENT APPLICATION**
published in accordance with Art. 158(3) EPC

(43) Date of publication:
**26.09.2007 Bulletin 2007/39**

(51) Int Cl.:
*H04J 1/00* (2006.01)    *H04J 3/00* (2006.01)
*H04J 4/00* (2006.01)    *H04J 11/00* (2006.01)

(21) Application number: **05703638.6**

(86) International application number:
**PCT/JP2005/000399**

(22) Date of filing: **14.01.2005**

(87) International publication number:
**WO 2006/075386 (20.07.2006 Gazette 2006/29)**

(84) Designated Contracting States:
**DE FR GB IT**

(71) Applicant: **Fujitsu Ltd.**
**Kawasaki-shi, Kanagawa 211-8588 (JP)**

(72) Inventors:
• **KIMURA, Dai,**
**FUJITSU LIMITED**
**Kawasaki-shi,**
**Kanagawa 2118588 (JP)**
• **DATEKI, Takashi,**
**FUJITSU LIMITED**
**Kawasaki-shi,**
**Kanagawa 2118588 (JP)**

• **SAWAMOTO, Toshiro,**
**FUJITSU LIMITED**
**Kawasaki-shi,**
**Kanagawa 2118588 (JP)**
• **MINOWA, Morihiko,**
**FUJITSU LIMITED**
**Kawasaki-shi,**
**Kanagawa 2118588 (JP)**

(74) Representative: **Stebbing, Timothy Charles**
**Haseltine Lake**
**5th Floor Lincoln House**
**300 High Holborn**
**London, WC1V 7JH (GB)**

(54) **FREQUENCY DIVISION COMMUNICATION SYSTEM**

(57) An orthogonal frequency division communication system which enables flexible modification of the ratio of allocation between uplink and downlink transmissions, while maintaining advantages similar to those of TDD (Time Division Duplex) systems, has a base station and a plurality of mobile stations connected by uplinks and downlinks, and a plurality of mutually orthogonal frequencies are allocated, on the frequency axis and on the time axis, to the uplinks and downlinks and to the plurality of mobile stations.

FIG. 4

EP 1 838 020 A1

**Description**

CROSS-REFERENCE TO RELATED APPLICATIONS

This application is a continuation of international application PCT/JP2005/000399, filed on January 14, 2005.

TECHNICAL FIELD

This invention relates to a frequency division communication system for multiplexing uplink and downlink transmission using a plurality of frequencies. In particular, this invention relates to an Orthogonal Frequency Division Multiplexing (OFDM) method in which the relation of frequencies is orthogonal so as to enable effective utilization of the frequencies used.

BACKGROUND ART

In the past, communication systems performing radio frequency multiplexing of uplink and downlink transmissions have adopted the Frequency Division Duplex (FDD) method or the Time Division Duplex (TDD) method.
Further, in third-generation mobile telephone systems, TDD methods adopted in TDS (Time Division Synchronous)-CDMA (Code Division Multiple Access) and other systems have enabled effective use, compared with FDD methods used in W-CDMA (Wideband Code Division Multiple Access) methods, of frequencies through the use of the same frequency band for uplink and downlink channels.
Moreover, there is the advantage that, by modifying the ratio of time allocated to uplink and downlink transmission, communication speeds can be changed flexibly, and asymmetric-rate data communication services can be efficiently provided.
Further, by using the same frequency for uplink and downlink transmission, it is expected that the uplink/downlink correlation will be high, and so the uplink channel can be used at the base station to estimate the downlink channel state. Or, the downlink channel can be used at the mobile station to estimate the uplink channel state.
For this reason, methods which in FDD systems require channel information feedback (for example, adaptive modulation, transmission diversity, and similar) can be performed without feedback in TDD systems.
However, in TDD systems it is necessary to rapidly switch between uplink and downlink transmission in order to prevent uplink/downlink interference. This results in more complex configurations for both the receiver and the transmitter. Further, because in TDD systems uplink/downlink allocation is limited to the time direction only, there is the possibility of more flexible allocation in the frequency direction.
One example of such a technique is proposed in Japanese Patent Laid-open No. 11-275036. In the CDMA/TDD method, signals having a TDMA structure are used, and by performing broadcast channel transmission and reception only in the last downlink slot of subframes, various services can be flexibly accommodated.

DISCLOSURE OF THE INVENTION

Hence an object of this invention is to provide an orthogonal frequency division communication system which, while maintaining advantages similar to those of TDD (Time Division Duplex) systems, also enables flexible modification of the uplink/downlink allocation ratio.
A frequency division communication system which attains the above object, in a first aspect, has a base station and a mobile station connected by an uplink and a downlink, and is characterized in that two frequencies are allocated to the uplink and downlink.
A frequency division communication system which attains the above object, in a second aspect, has a base station and a plurality of mobile stations connected by an uplink and a downlink, and is characterized in that a plurality of orthogonal frequencies are allocated, on the frequency axis and on the time axis, to the uplink and downlink, and to the plurality of mobile stations.
A frequency division communication system which attains the above object, in a third aspect, is the system of the second aspect, characterized in that the base station has a traffic monitoring portion which monitors the uplink/downlink traffic ratio, and in that allocation on the frequency axis and on the time axis of the plurality of frequencies is determined according to the traffic ratio monitored by the traffic monitoring portion.
A frequency division communication system which attains the above object, in a fourth aspect, is the system of the first or second aspect, characterized in that the frequencies allocated to the uplink and downlink are in close proximity, so that the frequency difference is such that the correlation value between uplink and downlink is high.
A frequency division communication system which attains the above object, in a fifth aspect, is the system of the fourth aspect, characterized in that the base station has a SIR measurement portion which measures the signal-to-noise ratio (SIR value) for each of the plurality of frequencies for the uplink; a modulation method decision portion which decides the modulation method according to the measurement values of the SIR measurement portion; and a modulation portion which applies the modulation method decided by the modulation method decision portion to the respective plurality of frequencies.

A frequency division communication system which attains the above object, in a sixth aspect, is the system of the fourth aspect, characterized in that the base station has a SIR measurement portion which measures the signal-to-noise ratio (SIR value) for each of the plurality of frequencies for the uplink, and in that the SIR measurement portion determines an average value of measurement values for frequencies allocated to each of the plurality of mobile stations, and has a modulation method decision portion which decides the modulation method corresponding to the average value; a modulation method decision portion which decides the modulation method for each mobile station, according to the average value of measurement values determined by the SIR measurement portion; and a modulation portion which applies the modulation method decided by the modulation method decision portion to each of the plurality of frequencies allocated to the mobile stations.

Characteristics of this invention will become more clear through the aspects explained below, referring to the drawings.

By means of this invention, multichannel uplink and downlink transmission is performed using a plurality of frequencies. For example, the subcarriers in Orthogonal Frequency Division Multiplex (OFDM) transmission are flexibly allocated to uplink and downlink transmission. By this means, while maintaining advantages similar to those of TDD (Time Division Duplex) methods, the ratio of allocation to uplink and downlink transmission can be modified flexibly.

BRIEF DESCRIPTION OF THE DRAWINGS

Fig. 1 is a drawing which explains in summary a transceiver employing a general Orthogonal Frequency Division Multiplex (OFDM) method, to which this invention can be applied;
Fig. 2 shows a frame structure;
Fig. 3 explains characteristics of the invention;
Fig. 4 shows an example of allocation to a plurality of mobile stations on the time axis and on the frequency axis, when an uplink and downlink are formed between a base station and a mobile station;
Fig. 5 shows an example of frame signals between a base station and mobile stations #1 and #2, and explains the meaning of guard intervals (GIs);
Fig. 6 explains operation of the synchronization portion of the base station;
Fig. 7 shows an example of the configuration of the baseband portion of a base station which controls subcarrier allocation;
Fig. 8 explains operation of the subcarrier allocation/control portion 33;
Fig. 9 shows the flow of operation to explain the configuration of Fig. 8;
Fig. 10 explains an example of a table to decide a channel allocation pattern;
Fig. 11 explains an embodiment of a base station according to this invention, combined with an adaptive modulation method;
Fig. 12 is a conceptual diagram of a case of multilevel modulation by subcarrier;
Fig. 13 explains an example of a decision in common of modulation methods for a plurality of subcarriers in a multilevel modulation circuit;
Fig. 14 shows the system configuration for a case in which a base station uses two transmission antennas in W-CDMA communication;
Fig. 15 shows the configuration of an embodiment in which the invention is applied to a base station using spatial diversity;
Fig. 16 shows the concept of operation of the embodiment configuration of Fig. 15;
Fig. 17 explains an example of the configuration of an embodiment of a base station applied to a case in which frequency diversity is used, as a method of estimating uplink and downlink propagation path states in a coherent band; and
Fig. 18 shows the concept of operation of the embodiment of Fig. 17.

BEST MODE FOR CARRYING OUT THE INVENTION

Below, embodiments of the invention are explained referring to the drawings. The embodiments explained below are intended to facilitate understanding of the invention, and the technical scope of the invention is not limited to these embodiments.

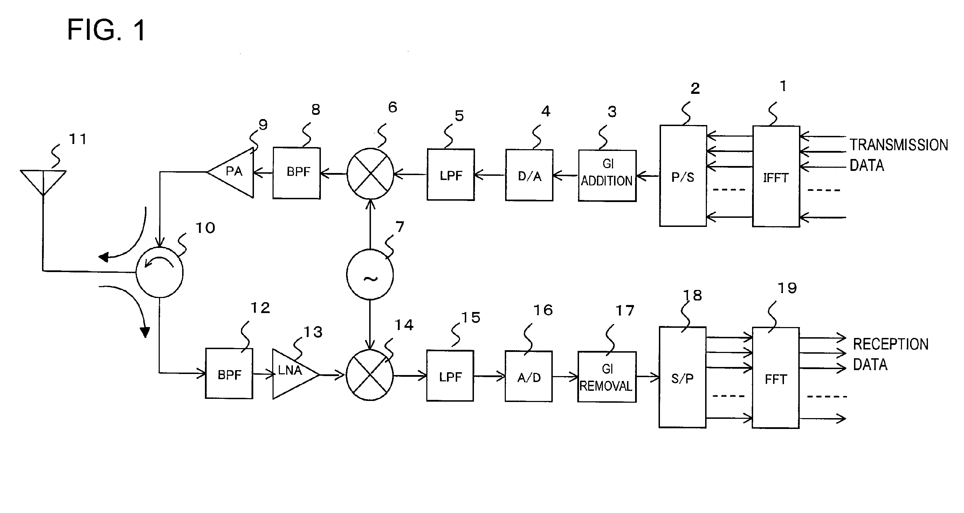

Fig. 1 explains in summary a general Orthogonal Frequency Division Multiplex (OFDM) method transceiver to which the invention is applied.

In Fig. 1, transmission data input to the transmitter side is allocated, by bit, to a plurality of subcarriers. Then, the IFFT converter 1 performs an Inverse Fast Fourier Transform (IFFT) to convert signals to the time domain.

Signals converted into the time domain are converted into serial signals by the P/S converter 2, and then the guard interval (GI) insertion circuit 3 inserts guard intervals (GIs) at each symbol.

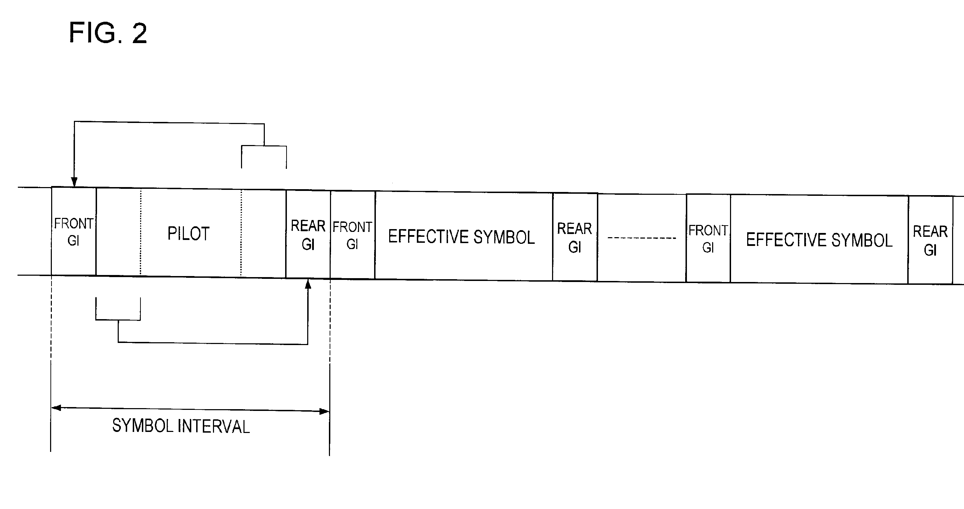

Here, as indicated in the frame structure of Fig. 2, guard intervals (GIs) have a front guard interval (GI) which is the portion for a prescribed period copied to the end of the IFFT data (pilot, effective symbol) copied to the beginning, and a rear guard interval (GI) which is the portion for a prescribed period at the beginning of the IFFT data copied to the end. One symbol period is formed by the front and rear guard intervals and the IFFT data.

A baseband signal with guard intervals (GIs) added is converted to an analog signal by the D/A converter 4, and after rolloff by a low-pass filter 5, is input to the modulator 6.

The modulator 6 modulates a carrier wave 7 at a radio frequency with the analog signal. The radio frequency signal from the modulator 6 is bandwidth-limited by the bandpass filter 8, then amplified by the power amplifier 9, and is transmitted from the antenna 11 via a circulator 10.

The signal output from the antenna 11 passes through a fading propagation path and is received by the antenna 11 of the other-side receiver. For convenience, other-side reception operation is explained using the transceiver configuration of Fig. 1.

The received radio frequency signal is converted into a baseband signal by the bandpass filter 12, linear amplifier 13 and demodulator 14.

Then, noise is reduced by the low-pass filter 15, and the A/D converter 16 performs conversion to digital signals. In addition, synchronization is obtained, guard intervals (GIs) are removed from the baseband signal in the guard interval removal circuit 17, and data for FFT processing is extracted for each symbol. Then, the extracted data for FFT processing is converted into parallel signals by the S/P converter 18, and a Fast Fourier Transform (FFT) is performed by the FFT circuit 19 to convert signals into frequency-domain subcarrier signals.

In a transceiver with the above configuration, as indicated by the frame structure shown, when a plurality of orthogonal subcarrier frequencies arranged on the frequency axis are divided and duplex transmission is performed, flexible allocation to uplink and to downlink transmission is possible.

That is, subcarriers for transmission data to be subject to Inverse Fast Fourier Transform (IFFT) processing are flexibly allocated to the uplink and to the downlink.

By this means, high-speed uplink/downlink switching is no longer needed. Further, on the time axis also, time division allocation between the uplink and downlink is performed. Hence the uplink/downlink allocation ratio can be modified more flexibly than in conventional time division duplexing (TDD).

That is, in Fig. 1, transmission signals from the transmitting station are allocated to a portion of the orthogonal frequencies by the Inverse Fast Fourier Transform (IFFT) portion 10. Because uplink signals and downlink signals are allocated to separate subcarriers, for subcarriers allocated on the receiving side, the IFFT portion on the transmitting side inputs "0".

On the other hand, on the receiving side only the output of subcarriers allocated on the receiving side after FFT by the Fast Fourier Transform (FFT) portion 19 is used.

By providing a circulator 10 at the antenna 11, leaking of transmission signals into the receiver can be suppressed to some extent. However, even when there is some leaking, orthogonal components are removed by FFT on the receiving side.

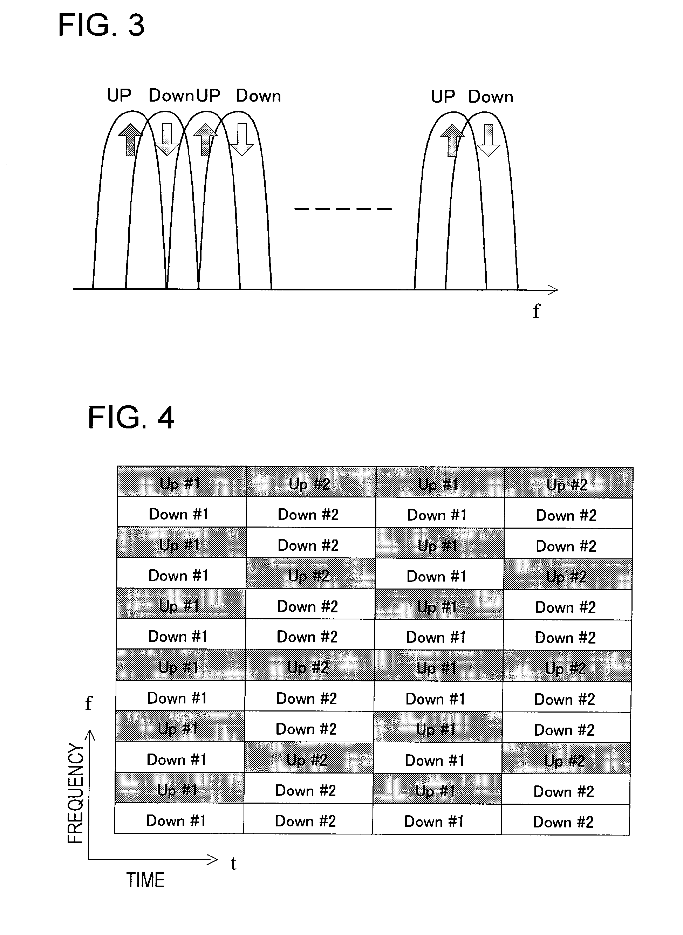

Fig. 4 is an example, when an uplink and downlink are configured between a base station and mobile stations, of allocation to a plurality of mobile stations (in the example of Fig. 4, to two stations, #1 and #2) on the time axis (t) and on the frequency axis (f).

In Fig. 4, for example, "Up#1" is an uplink for mobile station #1, that is, allocated to signals transmitted from mobile station #1 to the base station. Whereas for mobile station #1 uplink and downlink allocation is symmetrical, for mobile station #2 it is asymmetrical.

In this way, allocation for each mobile station is possible taking the asymmetry of traffic into account. Further, allocation is performed so as to make the interval between uplink and downlink allocated frequencies as small as possible. As a result, uplink signal channel estimation can be performed at the base station (using pilot symbols embedded in symbol periods at the beginning of frames; see Fig. 2), and when necessary, interpolation and other operations can be performed to estimate the downlink signal channel with high reliability.

This means that the base station and each of the mobile stations can share uplink and downlink channel information without signaling each other. Further, through effective utilization of frequencies by means of Orthogonal Frequency Division Multiplexing (OFDM), the efficiency of frequency use is equivalent to that of Time Division Duplex (TDD) methods.

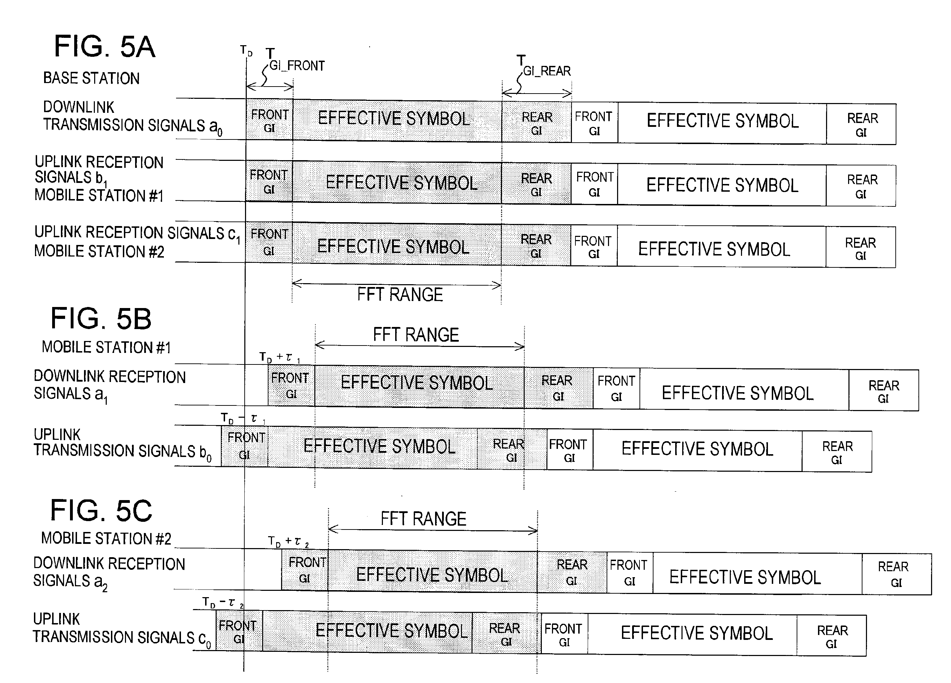

Fig. 5 shows frame signals between the base station and mobile stations #1 and #2, and explains the meaning of guard intervals (GIs).

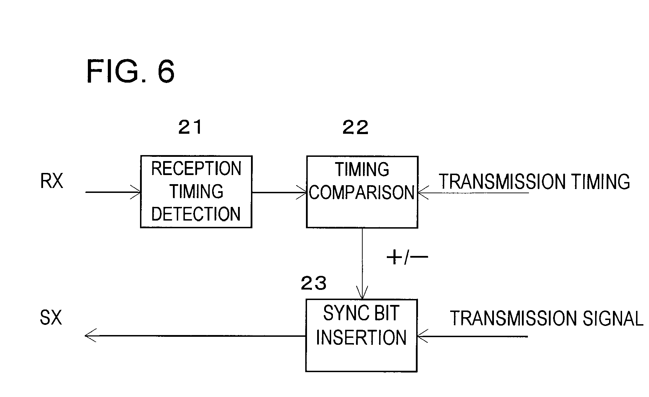

Fig. 5A shows downlink transmission signals and uplink signals received from mobile stations #1 and #2 in the base station. The base station has a synchronization portion, as shown in Fig. 6. In Fig. 6, synchronization probability signals are constantly sent to each of the mobile stations #1 and #2 by the synchronization bit insertion circuit 23. At the same time, guard intervals (GIs) in the uplink signals sent from the mobile stations are used to detect the uplink signal reception timing from each of the mobile stations #1 and #2 by the detection circuit 21. The detected reception timing and the transmission timing are compared by the timing comparator 22.

Commands are sent to each of the mobile stations to advance the transmission timing when the downlink transmission signal frame boundary ($T_D$) lags, and to delay the transmission timing when it leads. By this means, it is possible to simultaneously maintain the downlink transmission timing $a_0$ and the uplink reception timing $b_1$ and $c_1$ for the mobile stations #1 and #2.

That is, downlink reception signals and uplink transmission signals in mobile station #1 are shown in Fig. 5B. A time shift with a delay time Ti, equivalent to the transmission time between the base station and mobile station #1, occurs. Hence relative to a reference time $T_D$, downlink transmission signals $a_0$ from the base station are received at time $T_D+\tau_1$ as downlink reception signals $a_1$. On the other hand, transmission signals $b_0$ from the mobile station #1, received at the base station as reception signals $b_1$, are transmitted at time $T_D-\tau_1$ according to a command from the base station to advance the transmission timing.

Fig. 5C shows downlink reception signals and uplink transmission signals in mobile station #2. Similarly, a time shift with a delay time $\tau_2$, equivalent to the transmission time between the base station and mobile station #2, occurs. Hence relative to a reference time $T_D$, downlink transmission signals $a_0$ from the base station are received at time $T_D+\tau_2$ as downlink reception signals $a_2$. On the other hand, transmission signals $c_0$ from the mobile station #2, received at the base station as reception signals $c_1$, are transmitted at time $T_D-\tau_2$ according to a command from the base station to advance the transmission timing.

Further, in Fig. 5B and Fig. 5C, mobile stations #1 and #2 perform FFT processing in conformance with the beginning of the effective symbols of the downlink transmission signals $a_1$ and $a_2$. Because uplink/downlink orthogonality is maintained by the above-described synchronization portion shown in Fig. 6, interference due to transmission signals can be removed from reception signals.

Further, when the effect of delay spreading due to multipath is smaller than the front guard interval length ($T_{GI\_FRONT}$), complete removal is possible. In mobile station reception, FFT is performed in conformance with the beginning of the effective symbols of the downlink reception signals. When double the propagation delay time ($\tau_1$, $\tau_2$) is smaller than the rear guard interval length ($T_{GI\_REAR}$), interference of transmission signals can be completely removed from reception signals.

Moreover, with respect to delay spreading of downlink reception signals, similarly to uplink signals, when the delay spreading is smaller than the front guard interval length ($T_{GI\_front}$), complete removal is possible.

Here, when applying this invention, the base station decides the allocation of each subcarrier to mobile stations and uplink/downlink allocation taking into account reception quality estimate values from each mobile station and the traffic asymmetry for each mobile station.

In a transmission-side mobile station, transmission symbols are assigned to allocated subcarriers, and "0"s are allocated to other frequencies, and inverse fast Fourier transform processing is performed by the IFFT circuit 1. On the other hand, in a reception-side mobile station, after fast Fourier transform processing by the FFT circuit 19, only allocated subcarriers are used in subsequent signal processing.

Because a mobile station must be notified in advance of the allocated subcarriers, a downlink control channel or similar is prepared. When a dedicated subcarrier is used as a control channel, if for example control data is $d_c$ and other individual data is $d_d$, then by performing orthogonal modulation of these using a subcarrier at frequency $f_0$, the result is as expressed by equation (1).

[equation]
$$u_0(t) = (d_c + jd_d) \cdot \exp(j2\pi f_0 t) \quad \cdot \cdot \cdot \quad (1)$$

At the mobile station, by decoding the above $d_c$, control information from the base station can be received.

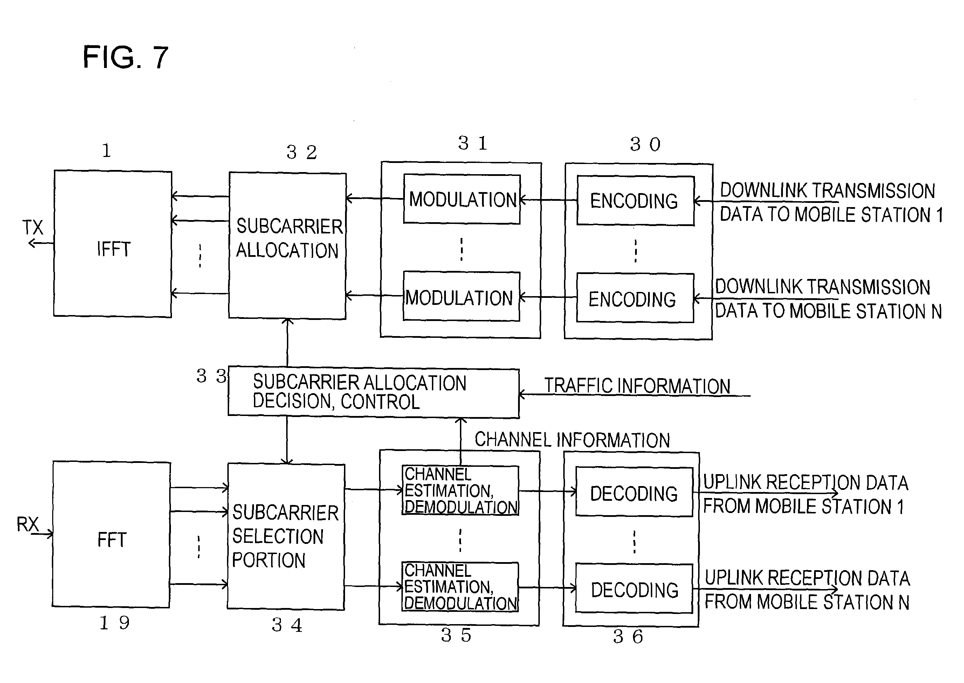

Fig. 7 shows an example of the configuration of the baseband portion of the base station, which controls the subcarrier allocation. On the transmitting side of the base station, prior to inverse fast Fourier transform processing by the IFFT circuit 1, subcarrier allocation is performed.

Encoding and modulation processing, handled by the encoder 30 and modulator 31, is performed on downlink transmission data to each of the plurality of mobile stations 1 to N, and the results are input to the subcarrier allocation circuit 32.

On the other hand, on the receiving side of the base station, reception signals are subjected to fast Fourier transform processing by the FFT circuit 19 and are input to the subcarrier selection circuit 34. The subcarrier allocation circuit 32 and subcarrier selection circuit 34 are controlled by the subcarrier allocation/control portion 33.

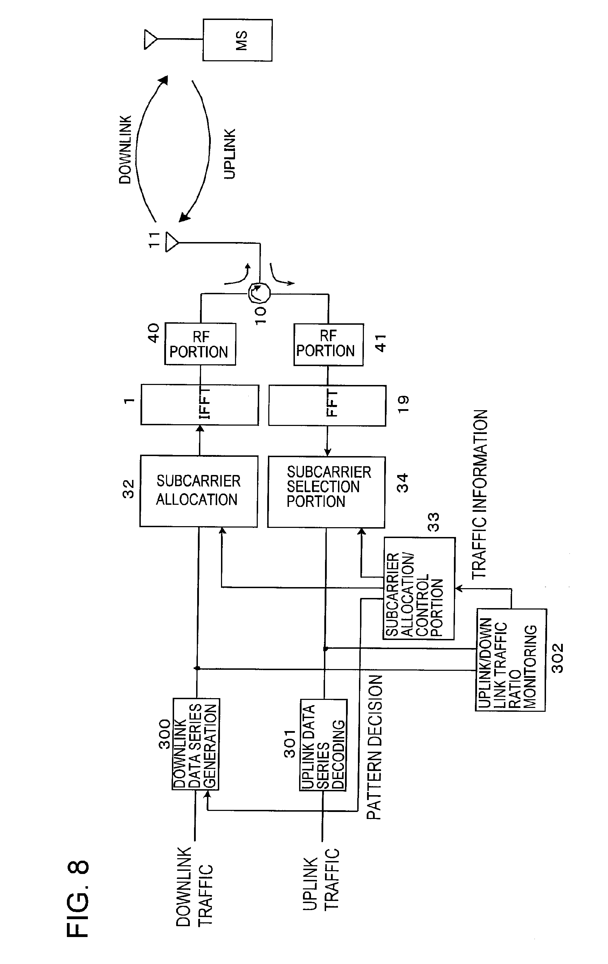

Operation of the subcarrier allocation/control portion 33 is explained referring to Fig. 8. In Fig. 8, the transmitting-side encoding circuit 30 and modulator 31 in Fig. 7 are represented by the downlink data generation portion 300, and the receiving-side channel estimation/demodulation circuit 35 and decoding circuit 36 are represented by the uplink data decoding portion 301. Further, high-frequency circuit portions 40 and 41 appear in the stage following the IFFT circuit 1 and in the stage preceding the FFT circuit 19. Further, an uplink/downlink traffic ratio monitor 302 is provided.

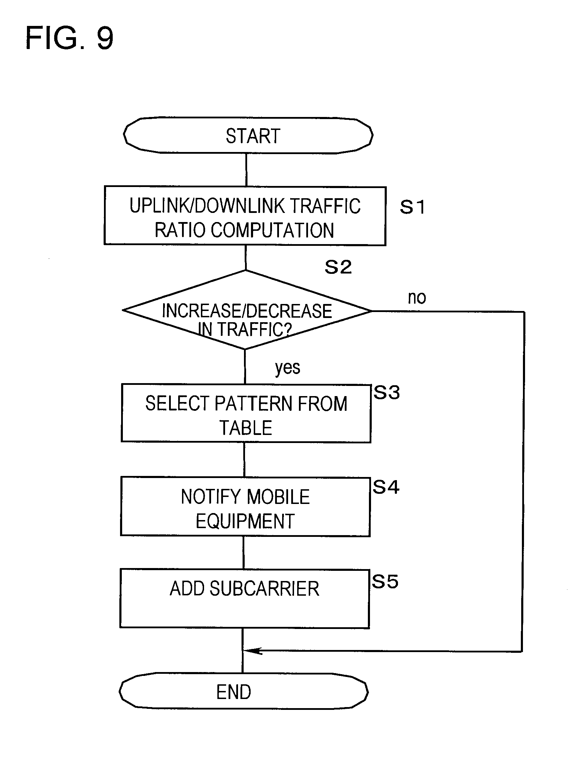

Fig. 9 shows the flow of operation, for use in explaining the configuration of Fig. 8. Referring to this flow diagram, the uplink/downlink traffic ratio monitor 302 monitors data traffic input to the downlink data generation portion 300 for each user (mobile station) and data traffic output to the uplink data decoding portion 301, and periodically determines the uplink/downlink traffic ratio (step S1).

The subcarrier allocation/control portion 33 takes as input the uplink/downlink traffic ratio monitored by the traffic ratio monitoring circuit 302 as traffic information, and controls the subcarrier allocation circuit 32 and subcarrier selection portion 34 such that channel allocation is always optimal.

That is, based on the traffic information, the subcarrier allocation/control portion 33 does not change the channel allocation if the computed ratio is the same as the previous value ("no" in step S2).

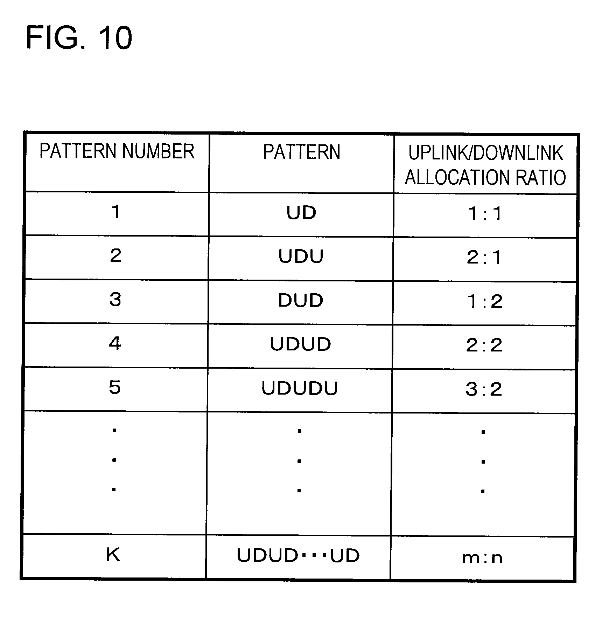

If the ratio is different from the previous value ("yes" in step S2), a channel allocation pattern is decided according to the example of the table shown in Fig. 10 (step S3). When for example the change is from 1:1 to 2:1, the allocation is changed from pattern no. 1 to pattern no. 2, and in this manner the subcarrier allocation portion 32 is controlled. Because this allocation information must be transmitted on the downlink control channel to notify the mobile station MS, the information is also passed to the downlink data series generation portion 300 (step S4).

Also, the subcarrier selection portion 34 is controlled such that addition and deletion of selected subcarriers is performed based on this information (step S5).

Here, methods are known for improving the data transfer rate through adaptive modulation, in which the modulation method and coding rate are changed according to the radio environment (received signal to noise ratio (SIR: Signal to Interface power Ratio)).

For example, at the radio base station, QPSK is used when the radio reception state is poor (when the SIR is low), and the 16QAM modulation method is used when the reception state is good. There may be cases in which the coding rate is changed as well as the modulation method. That is, selection may be performed automatically according to the reception environment so that a code with powerful error correction performance is used when the reception state is poor, and a code with weaker error correction performance is used when the reception state is good.

In this way, the combination of modulation method and coding rate is optimized for the state of the radio environment, and as a result the data transfer rate can be improved.

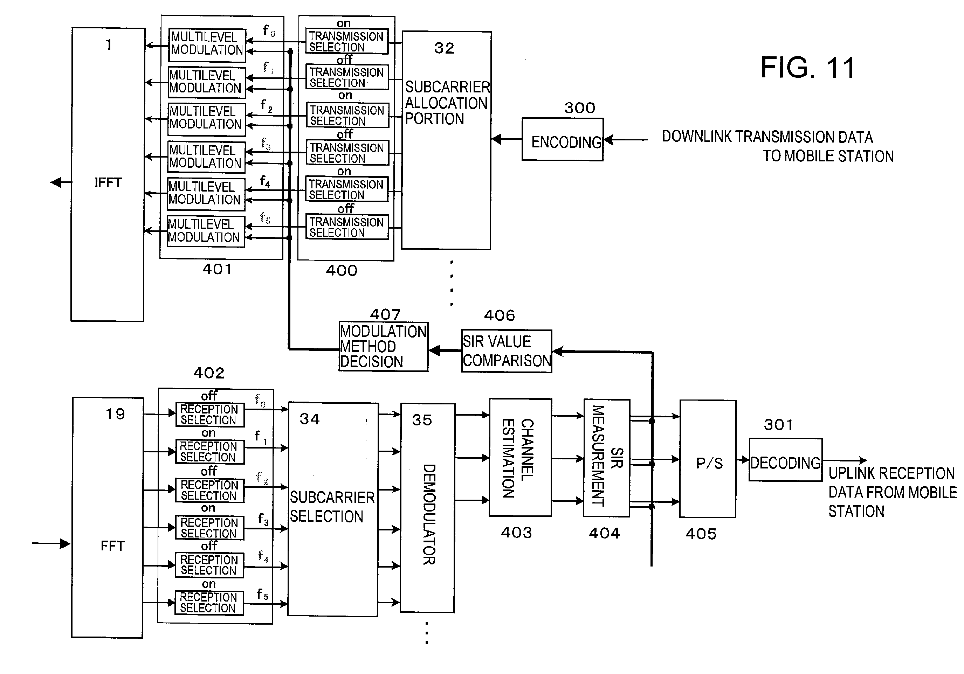

This invention can be combined with such adaptive modulation methods. Fig. 11 explains an embodiment of a base station according to this invention combined with an adaptive modulation method.

In Fig. 11, on the receiving side the method explained in the previous embodiment is used by the subcarrier selection portion 34 to judge subcarrier frequency allocation for each user, and only signals necessary for demodulation are selected by the reception selection circuit 402.

On the transmitting side, "0"s are transmitted by the transmission selection portion 400 prior to modulation using subcarriers selected by the subcarrier selection portion 34.

On the receiving side, for each of the selected subcarriers, demodulation by the demodulator 35 and channel estimation by the channel estimation portion 403 are performed, and the SIR measurement portion 404 computes SIR values.

Then, computed SIR values are compared with thresholds by the SIR value comparison portion 406, and the modulation method is decided in the modulation method decision portion 407, according to a table prepared in advance.

On the transmitting side, on the other hand, the method described in the previous embodiment is again used to allocate and select subcarrier frequencies by the subcarrier allocation portion 32 and transmission selection portion 400, and multilevel modulation is performed by the multilevel modulation portion 401 for parallel-converted bit series for each user (mobile station).

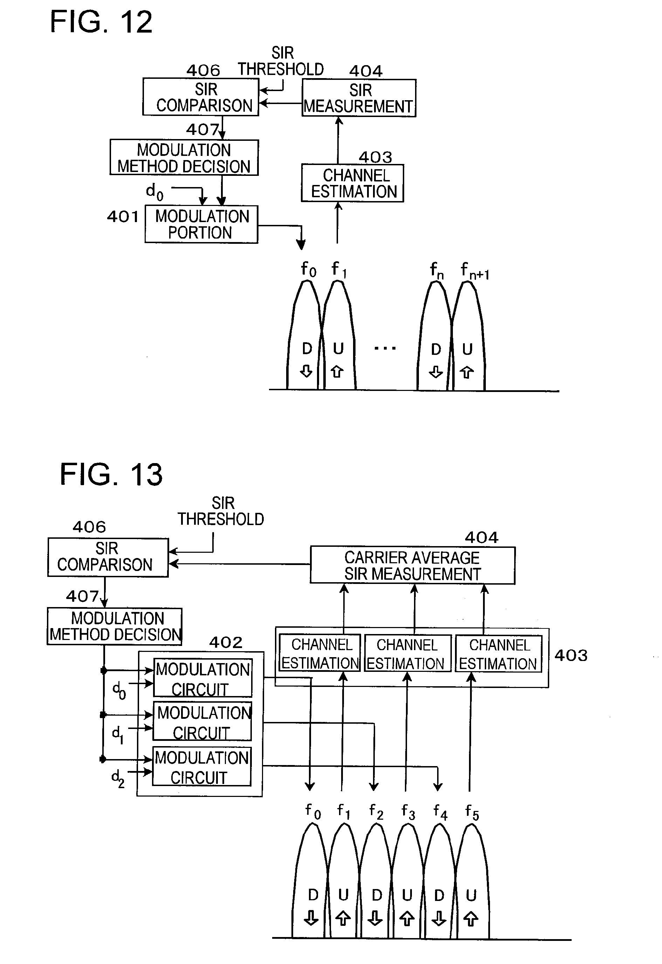

Here, Fig. 12 is a conceptual diagram of multilevel modulation for each subcarrier. Fig. 12 extracts and shows only portions related to Fig. 11.

In Fig. 12, the multilevel modulation portion 401 has a plurality of multilevel modulation circuits corresponding to subcarriers. Channel estimation is performed by the channel estimation portion 403, and SIR values are computed by the SIR measurement portion 404. Then, the computed SIR values are compared with thresholds by the SIR value comparison portion 406, and in the modulation method decision portion 407, modulations methods are decided for subcarriers according to a table prepared in advance.

Modulation by digital signals do input from the transmission selection portion 400 is performed by each of the plurality of multilevel modulation circuits of the multilevel modulation portion 401 according to these decisions, using the modulation methods thus decided.

As shown in Fig. 13, the average SIR for the plurality of subcarriers (for example, $f_1$, $f_3$, $f_5$) allocated to each user (mobile station) may be determined by the SIR measurement circuit 404, which is compared with a SIR threshold, and under prescribed conditions, the modulation method may be decided in common in the multilevel modulation circuits of the multilevel modulation portion 401 for the corresponding plurality of subcarriers.

In order to explain other examples of application of the invention, closed-loop transmission diversity in W-CDMA, which is a third-generation mobile communication system, is explained as one example of transmission diversity.

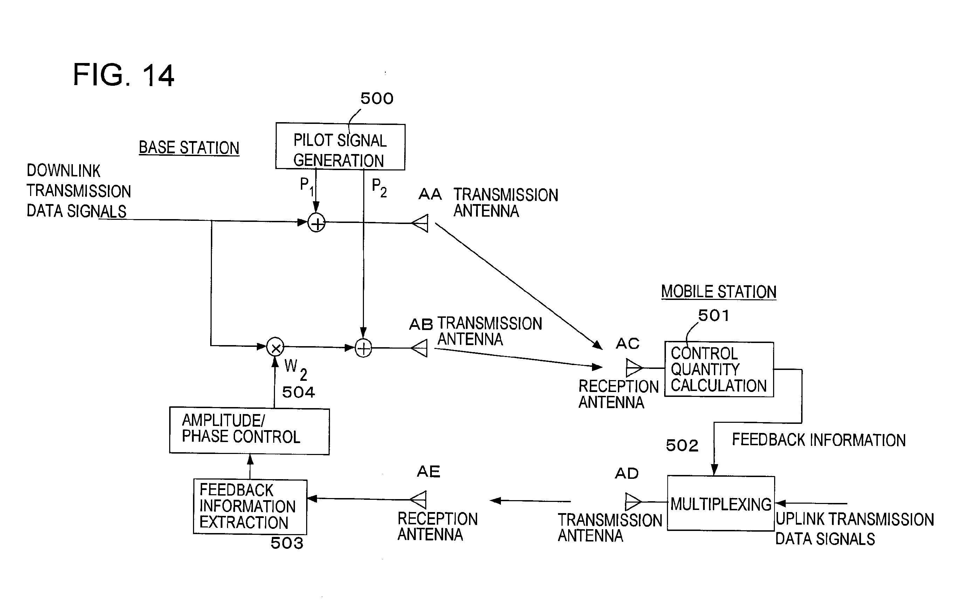

In W-CDMA, a method is adopted in which two transmission antennas are used. Fig. 14 shows the system configuration for a case in which two transmission antennas are used. Mutually orthogonal pilot patterns $P_1$ and $P_2$ are generated by a pilot signal generation portion 500 and transmitted from the two transmission antennas AA and AB of the base station.

On the receiving side of a mobile station, the pilot patterns $P_1$ and $P_2$ are received by the reception antenna AC, and the correlation between known pilot patterns and the received pilot signals are computed by the control quantity calculation portion 501.

Based on the computed correlations, channel impulse response vectors $\underline{h}_1$ and $\underline{h}_2$ from each of the transmission antennas AA and AB of the base station to the mobile station reception antenna AC can be estimated.

Using the channel estimation values, the amplitude and phase control vector (weight vector) for each transmission antenna of the base station which maximizes the power PW is computed:

[equation]
$$\underline{w} = [w_1, w_2]^T \quad \cdots \quad (2)$$

and by quantizing and multiplexing the result as feedback information with channel signals in the multiplexing circuit 502, the information is transmitted from the transmission antenna AD to the base station.

However, it is not necessary to transmit both of the values $w_1$ and $w_2$ in the phase control vector (weight vector); when the vector is determined such that $w_1=1$, it is sufficient to transmit only the value of $w_2$.

Here, the power PW is expressed by equation (3).

[equation]
$$PW = \underline{w}^H H^H H \underline{w} \quad \cdots \quad (3)$$

[equation]
$$H = [\underline{h}_1, \underline{h}_2] \quad \cdots \quad (4)$$

In equation (3), $\underline{h}_1$ and $\underline{h}_2$ from the antennas AA and AB respectively, form the channel impulse response vector.

If the impulse response length is L, then $\underline{h}_i$ is expressed by the following equation (5).

[equation]
$$\underline{h}_i = [h_{i1}, h_{i2}, \cdots, h_{iL}]^T \quad \cdots \quad (5)$$

At the time of a soft handover, in place of equation (3), the control vector which maximizes the power as given by equation (6) is computed.

[equation]
$$PW = \underline{w}^H (H_1^H H_1 + H_2^H H_2 + \cdots) \underline{w} \quad \cdots \quad (6)$$

Here $H_k$ is the channel impulse response for signals from the kth base station.

In W-CDMA, two methods are stipulated, which are mode 1 in which weighting factors $W_2$ are quantized to 1 bit, and mode 2 in which quantization is to 4 bits.

In mode 1, control is executed by transmitting 1 bit of feedback information for each slot, so that while control speed is fast, quantization is coarse, and so accurate control is not possible.

On the other hand, in mode 2 control employs 4 bits of information, so that more precise control is possible; on the other hand, 1 bit is transmitted for each slot, with 1 word of feedback information transmitted over 4 slots. Hence when the fading frequency is high, the fading cannot be tracked, and characteristics are degraded.

Thus when the uplink channel signal transmission rate to transmit feedback information is limited, there is a tradeoff between control precision and fading tracking response.

In the W-CDMA Release 99 specification, no consideration is made for cases in which more than two transmission antennas are used in order to avoid declines in uplink channel transmission efficiency due to feedback information transmission. However, expansion to three or more antennas is possible in order to increase the amount of feedback information and to allow a decline in the update rate.

When there are N transmission antennas, different transmission antennas are used to transmit N mutually orthogonal pilot signals $P_1(t)$, $P_2(t)$, ..., $P_N(t)$ at the radio base station.

These pilot signals are related as indicated by equation (7).

[equation]
$$\int P_i(t)P_j(t)dt = 0 \ (i \neq j) \quad \cdots \quad (7)$$

In the above equation (6), each of the pilot signals receives the amplitude and phase changes due to fading, and the composite of these signals is input to the mobile station reception antenna AC.

In the mobile station receiver, by having the control quantity calculation portion 501 determine the correlations with $P_1(t)$, $P_2(t)$, ..., $P_N(t)$ of the received pilot signals, channel impulse response vectors $\underline{h}_1$, $\underline{h}_2$, ..., $\underline{h}_N$ for each of the pilot signals can be estimated.

Using these channel impulse response vectors, the amplitude and phase control vectors (weight vectors) for each transmission antenna of the base station,

[equation]
$$\underline{w} = [w_1, w_2, \cdots, w_N]^T$$

which maximize the power PW, are computed as in equation (8); these are quantized and multiplexed with uplink channel signals as feedback information, and transmitted from the antenna AD to the base station.

However, in this case also, when values are determined with $w_1=1$, it is sufficient to transmit the values of $W_2$, $w_3$, ..., $w_N$.

[equation]
$$PW = \underline{w}^H H^H H \underline{w} \quad \cdots \quad (8)$$

[equation]
$$H = [\underline{h}_1, \underline{h}_2, \cdots, \underline{h}_N] \quad \cdots \quad (9)$$

On the base station side, the feedback information is received by the reception antenna AE, and is extracted by the feedback information extraction circuit 503. The feedback information extraction circuit 503 controls the amplitude/phase control circuit 504 based on the extracted feedback information.

Thus in closed-loop transmission diversity in a W-CDMA system, a configuration is employed in which the downlink power is sent from the mobile station to the base station as feedback information.

Through application of this invention, by estimating the propagation path state for downlink transmission from uplink transmission in a coherent band, feedback from the mobile equipment can be omitted.

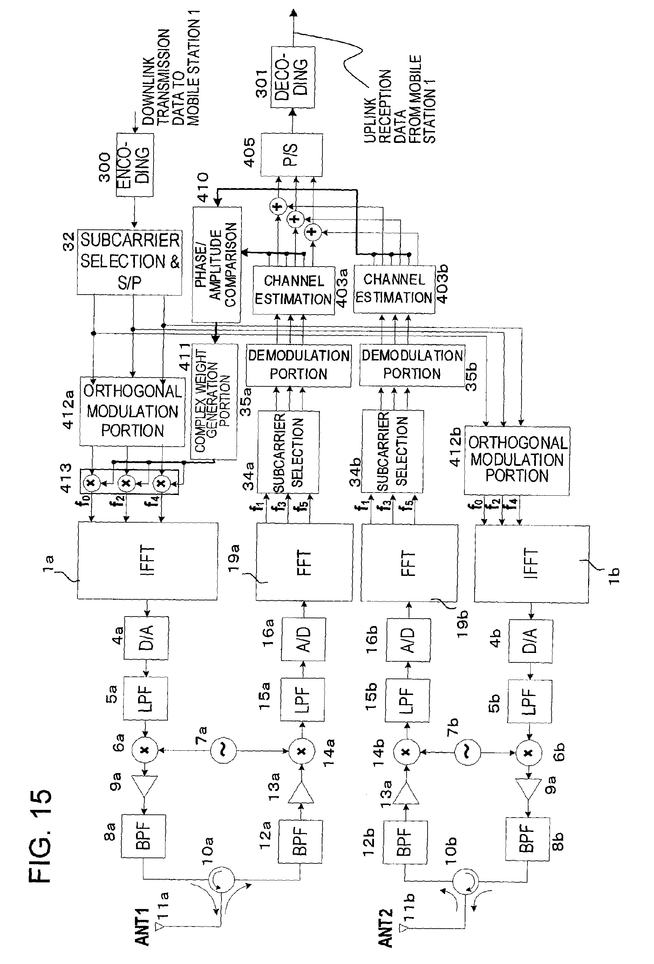

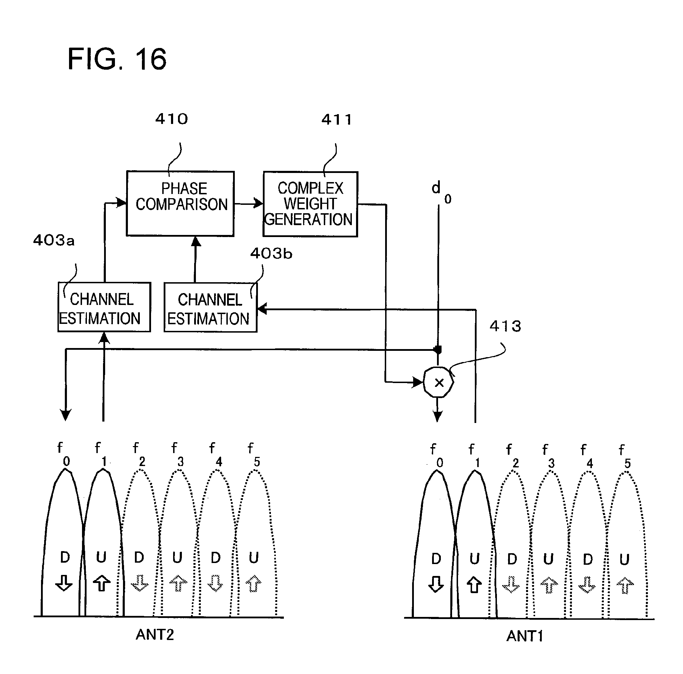

Fig. 15 shows the configuration of an embodiment to which this invention is applied of a base station employing spatial diversity, and Fig. 16 shows the concept of operation thereof.

The base station configuration shown in Fig. 15 has a transmission/reception system belonging to a first antenna 11a and a transmission/reception system belonging to a second antenna 11b.

In this base station, signals for a certain user are extracted from signals received by the two antennas 11a and 11b. In the embodiment shown in Fig. 15, the mobile equipment 1 uses each of the subcarriers $f_0$, $f_2$, $f_4$ for downlink, and $f_1$, $f_3$, $f_5$ for uplink.

For example, in propagation path estimation for subcarrier $f_0$ in downlink transmission, the mobile equipment 1 uses channel estimate values for a subcarrier orthogonal to the subcarrier $f_0$, that is, the adjacent subcarrier $f_1$ used in uplink transmission.

That is, in Fig. 15, the signals of subcarrier $f_1$ are selected by the subcarrier selection portion 34a from the uplink signals received by the first antenna 11a, and channel estimation is performed by the channel estimation portion 403a. Similarly, the signals of subcarrier $f_1$ are selected by the subcarrier selection portion 34b from the uplink signals received by the second antenna 11b, and channel estimation is performed by the channel estimation portion 403b.

These estimation values are input to the phase/amplitude comparison portion 410, and as shown in Fig. 16, the channel estimation values for $f_1$ for the antennas 11a and 11b are compared in amplitude and phase by the amplitude/phase comparison portion 410; based on the comparison results, the complex weight generation portion 411 calculates the weight vector indicated in equation (2) such that the power PW of the above equation (3) is maximum. Then, the calculated weight vector is multiplied by the multiplier 413, and the downlink power is controlled.

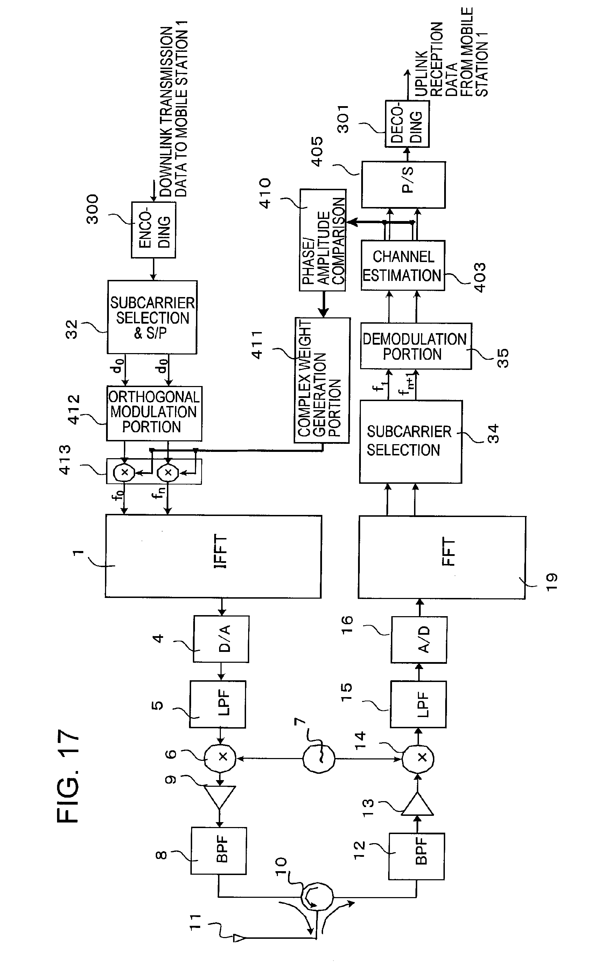

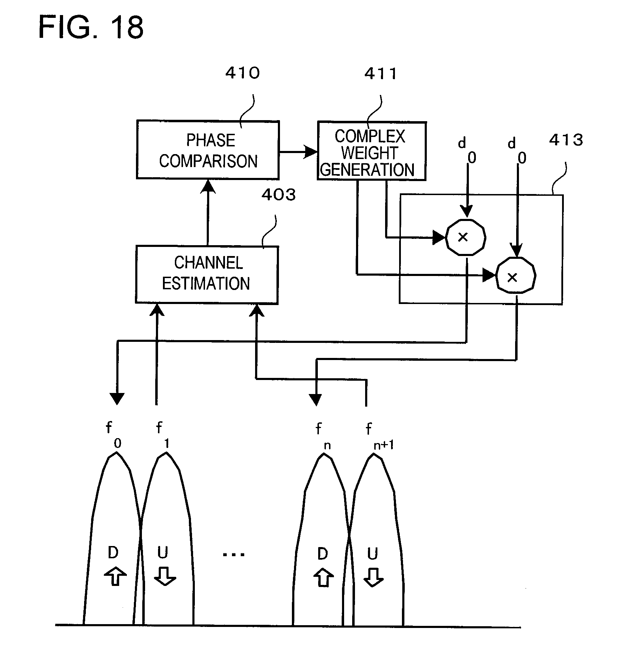

Fig. 17 explains an example of the configuration of a base station with frequency diversity applied, as a method of estimating the downlink propagation path state from uplink transmission within a coherent band. Fig. 18 shows the concept of operation thereof.

This embodiment is an example of a case in which frequency diversity is used, but similarly to the embodiment shown in Fig. 15 and Fig. 16 for spatial diversity, the channel estimation values of adjacent carriers can be used in downlink propagation path estimation, so that feedback from the mobile equipment can be omitted.

In Fig. 17 and Fig. 18, to ascertain the downlink propagation path states for subcarriers $f_0$ and $f_n$ for which frequency diversity is performed, for example, adjacent orthogonal subcarrier $f_1$ is used for subcarrier $f_0$, and adjacent orthogonal subcarrier $f_{n+1}$ is used for subcarrier $f_n$.

In the subcarrier selection portion 34, the subcarriers $f_1$ and $f_{n+1}$ are selected, demodulation is performed by the demodulator 35, and channel estimation is performed by the channel estimation portion 403. Then, amplitude and phase comparisons are performed by the phase/amplitude comparison portion 410 for the channel estimation values, and based on the comparison results, the weight vector is calculated by the complex weight generation portion 411 as indicated by equation (2) such that the power PW in the above equation (3) is maximum. Then, the calculated weight vector is multiplied by the multiplier 413, and the downlink power is controlled.

In the embodiment of Fig. 17 and Fig. 18, frequencies with low correlation are selected as the subcarriers $f_0$ and $f_n$ so that as much of a diversity effect as possible is obtained. On the other hand, for downlink transmission modulation is performed and data transmitted on different subcarriers $f_0$ and $f_1$ with the same complex symbol series do. "0" is inserted for unused carriers and for uplink carriers.

Aspects of this invention have been explained using OFDM, but there is no need for an orthogonal relation between the uplink and downlink subcarrier frequencies. Application to a simple FDM system is also possible.

INDUSTRIAL APPLICABILITY

As explained above, by performing multiplexing of uplink and downlink transmissions using orthogonal frequencies, flexible allocation to uplink and downlink transmissions is possible. As a result, a system can be provided which, while maintaining advantages similar to those of TDD (Time Division Duplex) communication, enables flexible modification of the uplink/downlink allocation ratio.

**Claims**

1. A frequency division communication system, having a base station and a mobile station connected by an uplink and a downlink, wherein two different frequencies are allocated to said uplink and said downlink.

2. A frequency division communication system, having a base station and a plurality of mobile stations connected by an uplink and a downlink, wherein a plurality of different frequencies are allocated, on the frequency axis and on the time axis, to said uplink and said downlink, and to said plurality of mobile stations.

**3.** The frequency division communication system according to Claim 2, wherein said base station has a traffic monitoring portion which monitors the traffic ratio of said uplink and downlink, and allocation of said plurality of frequencies on the frequency axis and on the time axis is decided according to the traffic ratio monitored by said traffic monitoring portion.

**4.** The frequency division communication system according to Claim 1 or Claim 2, wherein frequencies allocated to said uplink and said downlink have frequency differences in close proximity such that correlation values between said uplink and downlink are high.

**5.** The frequency division communication system according to Claim 4, wherein said base station comprises a SIR measurement portion which measures the signal-to-noise ratio (SIR value) for each of said plurality of frequencies for the uplink, a modulation method decision portion which decides the modulation method according to measurement values of said SIR measurement portion, and a modulation portion which applies the modulation method decided by said modulation method decision portion to each of said plurality of frequencies.

**6.** The frequency division communication system according to Claim 4, wherein said base station comprises a SIR measurement portion which measures the signal-to-noise ratio (SIR value) for each of said plurality of frequencies for the uplink, and said SIR measurement portion determines an average value of measurement values for frequencies allocated to each of said plurality of mobile stations, and further comprises:

a modulation method decision portion, which decides the modulation method corresponding to each mobile station according to the average value of measurement values determined by said SIR measurement portion; and a modulation portion which applies the modulation method decided by said modulation method decision portion to each of said plurality of frequencies allocated to said mobile stations.

EP 1 838 020 A1

# FIG. 1

FIG. 2

# FIG. 3

UP  DownUP  Down                    UP  Down

- - - - -

f

# FIG. 4

| Up #1 | Up #2 | Up #1 | Up #2 |
|---|---|---|---|
| Down #1 | Down #2 | Down #1 | Down #2 |
| Up #1 | Down #2 | Up #1 | Down #2 |
| Down #1 | Up #2 | Down #1 | Up #2 |
| Up #1 | Down #2 | Up #1 | Down #2 |
| Down #1 | Down #2 | Down #1 | Down #2 |
| Up #1 | Up #2 | Up #1 | Up #2 |
| Down #1 | Down #2 | Down #1 | Down #2 |
| Up #1 | Down #2 | Up #1 | Down #2 |
| Down #1 | Up #2 | Down #1 | Up #2 |
| Up #1 | Down #2 | Up #1 | Down #2 |
| Down #1 | Down #2 | Down #1 | Down #2 |

f

FREQUENCY

t

TIME

# FIG. 5A

BASE STATION

DOWNLINK TRANSMISSION SIGNALS $a_0$

| FRONT GI | EFFECTIVE SYMBOL | REAR GI | FRONT GI | EFFECTIVE SYMBOL | REAR GI |

UPLINK RECEPTION SIGNALS $b_1$ MOBILE STATION #1

| FRONT GI | EFFECTIVE SYMBOL | REAR GI | FRONT GI | EFFECTIVE SYMBOL | REAR GI |

UPLINK RECEPTION SIGNALS $c_1$ MOBILE STATION #2

| FRONT GI | EFFECTIVE SYMBOL | REAR GI | FRONT GI | EFFECTIVE SYMBOL | REAR GI |

$T_D$ $T_{GI\_FRONT}$ $T_{GI\_REAR}$

FFT RANGE

# FIG. 5B

MOBILE STATION #1

DOWNLINK RECEPTION SIGNALS $a_1$

$T_D + \tau_1$

| FRONT GI | EFFECTIVE SYMBOL | REAR GI | FRONT GI | EFFECTIVE SYMBOL | REAR GI |

FFT RANGE

UPLINK TRANSMISSION SIGNALS $b_0$

$T_D - \tau_1$

| FRONT GI | EFFECTIVE SYMBOL | REAR GI | FRONT GI | EFFECTIVE SYMBOL | REAR GI |

# FIG. 5C

MOBILE STATION #2

DOWNLINK RECEPTION SIGNALS $a_2$

$T_D + \tau_2$

| FRONT GI | EFFECTIVE SYMBOL | REAR GI | FRONT GI | EFFECTIVE SYMBOL | REAR GI |

FFT RANGE

UPLINK TRANSMISSION SIGNALS $c_0$

$T_D - \tau_2$

| FRONT GI | EFFECTIVE SYMBOL | REAR GI | FRONT GI | EFFECTIVE SYMBOL | REAR GI |

14

# FIG. 6

# FIG. 7

EP 1 838 020 A1

# FIG. 8

# FIG. 9

START

UPLINK/DOWNLINK TRAFFIC RATIO COMPUTATION — S1

S2

INCREASE/DECREASE IN TRAFFIC? — no

yes

SELECT PATTERN FROM TABLE — S3

NOTIFY MOBILE EQUIPMENT — S4

ADD SUBCARRIER — S5

END

# FIG. 10

| PATTERN NUMBER | PATTERN | UPLINK/DOWNLINK ALLOCATION RATIO |
|---|---|---|
| 1 | UD | 1 : 1 |
| 2 | UDU | 2 : 1 |
| 3 | DUD | 1 : 2 |
| 4 | UDUD | 2 : 2 |
| 5 | UDUDU | 3 : 2 |
| . . . | . . . | . . . |
| K | UDUD···UD | m : n |

FIG. 11

EP 1 838 020 A1

# FIG. 12

SIR THRESHOLD

406 SIR COMPARISON ← 404 SIR MEASUREMENT

407 ↓

MODULATION METHOD DECISION

$d_0$

401 MODULATION PORTION

403 CHANNEL ESTIMATION

$f_0$  $f_1$  ...  $f_n$  $f_{n+1}$

D ⇩  U ⇧  ...  D ⇩  U ⇧

# FIG. 13

SIR THRESHOLD

406 SIR COMPARISON ← 404 CARRIER AVERAGE SIR MEASUREMENT

407 ↓

MODULATION METHOD DECISION

402

MODULATION CIRCUIT
$d_0$
MODULATION CIRCUIT
$d_1$
MODULATION CIRCUIT
$d_2$

CHANNEL ESTIMATION | CHANNEL ESTIMATION | CHANNEL ESTIMATION   403

$f_0$  $f_1$  $f_2$  $f_3$  $f_4$  $f_5$

D ⇩  U ⇧  D ⇩  U ⇧  D ⇩  U ⇧

# FIG. 14

BASE STATION

PILOT SIGNAL GENERATION

500

DOWNLINK TRANSMISSION DATA SIGNALS

$P_1$   $P_2$

AA TRANSMISSION ANTENNA

MOBILE STATION

501

AC

CONTROL QUANTITY CALCULATION

AB TRANSMISSION ANTENNA

RECEPTION ANTENNA

$W_2$

504

AMPLITUDE/ PHASE CONTROL

FEEDBACK INFORMATION

502

AE

AD

FEEDBACK INFORMATION EXTRACTION

RECEPTION ANTENNA

TRANSMISSION ANTENNA

MULTIPLEXING

UPLINK TRANSMISSION DATA SIGNALS

503

EP 1 838 020 A1

FIG. 15

FIG. 16

# FIG. 17

EP 1 838 020 A1

# FIG. 18

<table>
<tr><td colspan="2" align="center">**INTERNATIONAL SEARCH REPORT**</td><td>International application No.<br>PCT/JP2005/000399</td></tr>
</table>

| A. CLASSIFICATION OF SUBJECT MATTER |
|---|
| Int.Cl⁷ H04J1/00, H04J3/00, H04J4/00, H04J11/00 |

According to International Patent Classification (IPC) or to both national classification and IPC

| B. FIELDS SEARCHED |
|---|

Minimum documentation searched (classification system followed by classification symbols)
Int.Cl⁷ H04J1/00, H0J3/00, H04J4/00, H04J11/00

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho    1971-2005   Toroku Jitsuyo Shinan Koho   1994-2005

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y | JP 11-205277 A  (Toshiba Corp.),<br>30 July, 1999 (30.07.99),<br>Par. Nos. [0017], [0020]<br>(Family: none) | 1<br>2-6 |
| X<br>Y | JP 2000-165939 A  (Lucent Technologies Inc.),<br>16 June, 2000 (16.06.00),<br>Par. No. [0034]; Fig. 11<br>& EP 1005190 A2        & CA 2287022 A1<br>& US 2003/0193925 A1 | 1<br>2-6 |
| Y | JP 2004-364035 A  (Sharp Corp.),<br>24 December, 2004 (24.12.04),<br>Par. Nos. [0003], [0010]<br>(Family: none) | 2-6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>12 April, 2005 (12.04.05) | Date of mailing of the international search report<br>26 April, 2005 (26.04.05) |
|---|---|
| Name and mailing address of the ISA/<br>  Japanese Patent Office | Authorized officer |
| Facsimile No. | Telephone No. |

Form PCT/ISA/210 (second sheet) (January 2004)

**INTERNATIONAL SEARCH REPORT**

International application No.

PCT/JP2005/000399

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-304214 A (Sharp Corp.),<br>24 October, 2003 (24.10.03),<br>Par. Nos. [0008], [0030], [0031]<br>& WO 2003/085867 A1 & AU 2003211690 A1 | 2-6 |
| Y | JP 09-505185 A (GPT Ltd.),<br>20 May, 1997 (20.05.97),<br>Figs. 3, 4<br>& US 5668802 A1 & GB 2283879 A<br>& GB 9421751 A0 & EP 653859 A1<br>& WO 95013674 A1 & AU 8149494 A<br>& ES 2127896 T & ZA 9408935 A<br>& AU 688814 B & CA 2174864 A | 4-6 |
| Y | JP 2004-072724 A (Denso Corp.),<br>04 March, 2004 (04.03.04),<br>Par. No. [0089]<br>& US 2003/0223354 A1 | 5 |
| Y | JP 2002-246958 A (Mitsubishi Electric Corp.),<br>30 August, 2002 (30.08.02),<br>Figs. 1, 12<br>& WO 2002/067478 A1 & EP 1367752 A1<br>& US 2004/0076172 A1 | 6 |
| A | JP 2001-238269 A (KDDI Corp.),<br>31 August, 2001 (31.08.01),<br>Full text; all drawings<br>& US 2001/0024427 A1 & US 6836484 B2 | 1-6 |

Form PCT/ISA/210 (continuation of second sheet) (January 2004)

**REFERENCES CITED IN THE DESCRIPTION**

**Patent documents cited in the description**

- JP 2005000399 W

- JP 11275036 A